# EUROPÄISCHE PATENTANMELDUNG

(11) **EP 4 098 482 A1**
(43) Veröffentlichungstag der Anmeldung: **07.12.2022**
(21) Anmeldenummer: 22176460.8
(22) Anmeldetag: 31.05.2022
(51) Int. Cl.: B60N 2/28, B60N 2/68

(54) **GURTGESTELL UND FAHRZEUGSITZ**

(30) Priorität: 01.06.2021 DE 102021114201
(71) Anmelder: Aguti Produktentwicklung & Design GmbH, 88085 Langenargen (DE)
(72) Erfinder: Rogg, Christian, 88142 Wasserburg (DE)
(74) Vertreter: Otten, Roth, Dobler & Partner mbB Patentanwälte

(57) **Zusammenfassung**

Es wird ein Gurtgestell (1) für einen mit dem Gurtgestell (1) erstellbaren Fahrzeugsitz vorgeschlagen, wobei das Gurtgestell (1) zumindest eine Vertikalstütze (6-8) und ein zur Vertikalstütze (6-8) quer ausgerichtetes Querprofil (9) umfasst und dass zur Abstützung des Gurtgestells (1) am Fahrzeugboden ein Stützabschnitt des Gurtgestells (1) vorhanden ist. Der Stützabschnitt (16) greift im Bereich einer Höhe am verbleibenden Teil des Gurtgestells (1) an, die einer Sitzflächenhöhe am Gurtgestell (1) eines fertig montierten Fahrzeugsitzes entspricht.

## Beschreibung

### Stand der Technik

Gestelle für Sitze in Verkehrsmitteln, wie Tragestrukturen oder Gestelle für Fahrzeugsitze oder Fahrzeugsitzbänke z. B. Zweier- oder Dreiersitzbänke sind bekannt. Solche Gestelle kommen als Innere-Stützstruktur bei Personensitzen in Verkehrsmitteln wie als Gurtböcke in Fahrzeugen beispielsweise Personenkraftwagen, Kleinbussen, Wohnmobilen oder Camping-Mobilen zum Einsatz. Die aussteifend wirkenden und mechanisch tragenden Gestelle müssen insbesondere bei Belastungsspitzen hohen Kräften und Momenten widerstehen. Insbesondere sind in der Regel Personenrückhaltesysteme wie Sicherheitsgurtsysteme am Gurtgestell vorhanden, wodurch dieses in einem Unfall- bzw. Crash-Szenario einerseits mechanisch hoch belastet wird und andererseits sichergestellt sein muss, dass die im Fahrzeugsitz im Verkehrs- bzw. Fahrbetrieb sitzende Person keinen Schaden nimmt durch z. B. eine kritische Verformung des Fahrzeugsitzes. An Gurtgestellen oder Gurtböcken sind beim fertigen Sitz bzw. Fahrzeugsitz weitere Sitzelemente wie zum Beispiel Polsterungen und Sitz-Verstelleinrichtungen vorgesehen.

Die Gestelle müssen daher so ausgelegt sein, dass Sicherheits- und Stabilitätskriterien erfüllt sind, genauso wie wirtschaftliche und zum Beispiel ökologische Aspekte. Auch das Design des Fahrzeugsitzes betreffende Erfordernisse sind zu berücksichtigen.

### Aufgabe und Vorteile der Erfindung

Aufgabe der vorliegenden Erfindung ist es, eine Gestell der einleitend beschriebenen Art bzw. einen Sitz für ein Verkehrsmittel wie einen Fahrzeugsitz praxistauglich bereitzustellen. Insbesondere sollen Stabilitäts- und Sicherheitskriterien unter technischen und wirtschaftlichen Gesichtspunkten vorteilhaft erfüllt werden.

Diese Aufgabe wird durch die unabhängigen Ansprüche gelöst.

Die abhängigen Ansprüche betreffen vorteilhafte und zweckmäßige Weiterbildungen der Erfindung.

Die Erfindung geht aus von einem Gurtgestell für einen mit dem Gurtgestell erstellbaren Verkehrsmittelsitz oder Fahrzeugsitz. Nachfolgend wird der Begriff Fahrzeugsitz gleichbedeutend mit Verkehrsmittelsitz verwendet. Das Gurtgestell ist zur Anordnung einer Sitzpolsterung und eines Personenrückhaltesystems an dem Fahrzeugsitz ausgebildet ist, um mit dem Personenrückhaltesystem eine in Sitzrichtung im montierten Fahrzeugsitz sitzende Person zu sichern, und wobei das Gurtgestell zumindest eine Vertikalstütze und ein zur Vertikalstütze quer ausgerichtetes Querprofil umfasst, und wobei im montierten Zustand des Fahrzeugsitzes die Vertikalstütze in Längsrichtung vertikal ausgerichtet und über einen unteren Endabschnitt der Vertikalstütze im Bereich eines Fahrzeugbodens des Fahrzeugs befestigbar ist, und dass zur Abstützung des Gurtgestells am Fahrzeugboden ein Stützabschnitt des Gurtgestells vorhanden ist, wobei der Stützabschnitt in Sitzrichtung über eine Ebene vorsteht, die durch eine in Sitzrichtung vorne liegende Vorderseite der Vertikalstütze bestimmt ist, und wobei der Stützabschnitt über ein unteres Stützabschnitt-Ende am Fahrzeugboden befestigbar ist, wobei das untere Stützabschnitt-Ende in Sitzrichtung beabstandet ist zum unteren Ende der Vertikalstütze. Der Stützabschnitt ist vorzugsweise ein nach vorne unten gerichteter z. B. schräg in Sitzrichtung bzw. nach vorne ausgerichtetes längliches starres Profil. Der Stützabschnitt erstreckt sich in einem Raum unterhalb einer Sitzhöhe bzw. Sitzflächenhöhe des mit dem Gestell bildbaren Sitzes bzw. dessen Sitz-Polsterung.

Nachfolgend wird von einem Fahrzeug und einem Fahrzeugsitz gesprochen, wobei das Gurtgestell auch für einen Personen-Sitz in einem anderen Verkehrsmittel ausgebildet ist.

Das Gurtgestell ist vorzugsweise als eine Baueinheit gestaltet, die in einem Inneren des Fahrzeugs einbaubar an einem Fahrzeugboden befestigbar zum Beispiel anschraubbar ist und gegebenenfalls zusätzlich an einer Fahrzeugsäule, einer Wand- oder Deckenstruktur des Fahrzeugs fixierbar ist.

Das Gurtgestell ist vorzugsweise aus mehreren Komponenten zusammengebaut, vorzugsweise aus einem Stahlmaterial, die lösbar und/oder stoffschlüssig z. B. verschweißt verbunden sind.

Die zumindest eine Vertikalstütze, vorzugsweise die mehreren Vertikalstützen, und die Querstrebe sind als längliches Profil, vorzugsweise als Hohl- oder Vollmaterial-Profil, vorzugsweise als Mehrkant- bzw. Vierkant- oder Rohr-Hohlprofil oder als Flachmaterial gebildet. Die Vertikalstütze weist vertikal oberhalb des Querprofils vorzugsweise horizontal geschlitzte Abschnitte auf zur Vorgabe eines gewünschten plastischen Verformungsverhaltens im Belastungsfall bei Überschreiten einer Grenz-Zugbelastung in Sitzrichtung.

Der Begriff "Sitzrichtung" ist bezogen auf eine in dem mit dem Gurtgestell gebildeten Fahrzeugsitz sitzende Person zu verstehen und ist damit auch für das Gurtgestell eine festgelegte gegebene Richtung.

Vorzugsweise ist genau eine Vertikalstütze oder es sind genau zwei, genau drei oder genau vier Vertikalstützen für einen Einersitz oder einen Zweiersitz vorhanden.

Für einen Einer-Fahrzeugsitz oder eine Zweiersitzbank ist bevorzugt genau ein Stützabschnitt vorgesehen. Der Stützabschnitt ist vorzugsweise ein längliches gerades einstückiges Element, vorzugsweise aus einem Hohlprofil-Stahl. Der Stützabschnitt ist am Gurtgestell vorzugsweise als ein schräg nach vorne in Sitzrichtung abstehendes Stützbein ausgebildet. Der Stützabschnitt ist vorzugsweise durch genau ein Mehrkant-Hohlprofil bzw. Vierkant-Hohlprofil gebildet, mit einem Außenmaß z. B. im Bereich von 50x50 Millimeter. Alternativ ist der Stützabschnitt durch genau zwei Vierkant-Hohlprofile gebildet, die in Längsrichtung entlang einer jeweiligen flächigen Längsseite der beiden Vierkant-Hohlprofile miteinander verbunden sind. Die beiden Vierkant-Hohlprofile sind dabei vorzugsweise verschweißt oder verschraubt miteinander.

Das Querprofil ist bezogen auf den Nutz- bzw. Einbauzustand im Fahrzeug vorzugsweise horizontal ausgerichtet. Eine Höhe des Gurtgestells, z. B. entsprechend wenigstens einer längsten bodenabstützenden Vertikalstütze von mehreren Vertikalstützen, bzw. der einen Vertikalstütze, ist senkrecht gemessen bezogen auf den Einbauzustand des Gurtgestells. Die senkrechte Erstreckung fällt vorzugsweise mit der Längsachse der Vertikalstütze oder der mehreren parallelen Vertikalstützen zusammen. Dies bedeutet, dass bei am horizontal ausgerichteten Fahrzeugboden eingebautem Gurtgestell die Vertikalstütze senkrecht steht. Das Querprofil ist dabei vorzugsweise horizontal ausgerichtet und parallel zur Breitenrichtung des erstellbaren Fahrzeugsitzes. Die Sitzrichtung steht senkrecht zur Vertikalstütze und senkrecht zum Querprofil.

Eine Höhe "Null" des Gurtgestells fällt vorzugsweise mit einem unteren Ende des Gurtgestells bzw. mit dem unteren Ende der bodenabstützenden Vertikalstütze zusammen, was z. B. mit einem Niveau des Fahrzeugbodens korreliert bei eingebautem Gurtgestell.

Eine Gesamthöhe des Gurtgestells, insbesondere ausgehend von einem unteren Ende einer mit einem Fahrzeugboden verbindbaren Vertikalstütze, liegt zum Beispiel im Bereich von 1500 Millimeter. Dabei ergibt sich ein oberes Ende einer maximal langen bzw. hohen Vertikalstütze auf einer Höhe von ungefähr 1200 Millimetern. In der Regel ergibt sich zusätzlich oberhalb des oberen Endes der Vertikalstütze eine zusätzliche Höhe bzw. eine Gurtgestell-Teilhöhe durch insbesondere Elemente wie Bügel für Nackenstützen des Fahrzeugsitzes von z. B. ca. 250 Millimeter.

Bei zwei oder mehr Vertikalstützen, die vorzugsweise zueinander parallel sich erstrecken, steht das Querprofil seitlich außen bzw. horizontal an einer in der Breitenrichtung äußeren Vertikalstütze über oder vorzugsweise an beiden äußeren Vertikalstütze außen über. Der jeweilige äußere seitliche Überstand liegt zum Beispiel im Bereich von ca. 100 Millimeter.

Der Kern der Erfindung liegt darin, dass der Stützabschnitt im Bereich einer Höhe am verbleibenden Teil des Gurtgestells angreift, die einer Sitzflächenhöhe am Gurtgestell eines fertig montierten Fahrzeugsitzes entspricht. Vorzugsweise greift der Stützabschnitt im Bereich einer Höhe am verbleibenden Teil des Gurtgestells an, welche durch eine Oberseite eines Sitzflächenpolsters der Sitzpolsterung des mit dem Gurtgestell bildbaren Fahrzeugsitzes vorgegeben ist. Die Oberseite des Sitzflächenpolsters bildet eine Sitzfläche des Fahrzeugsitzes mit der dazugehörigen Sitzflächenhöhe des Sitzpolsters. Die Sitzfläche bzw. die Oberseite des Sitzpolsters ist im Nutzzustand des Fahrzeugsitzes bei horizontaler Fahrzeuglängsachse horizontal oder im Wesentlichen horizontal ausgerichtet bzw. geringfügig geneigt zur Horizontalen.

Durch diese Maßnahme lässt sich gegenüber einem bisherigen für einen vergleichbaren Einsatz verwendeten Gurtgestell, das z. B. für einen Einzelsitz oder eine Zweiersitzbank dient, das Gewicht deutlich reduzieren um zum Beispiel circa 25 %. Dies ermöglicht in einer beispielhaften konkreten Anwendung eine Gewichtsersparnis des Gurtgestells um z. B. circa 7 Kilogramm für ein Zweiersitz-Gurtgestell.

Dies hat weitreichende bzw. vorteilhafte Folgen, beginnend bei der Produktion bis zu Vorteilen in der Anwendung im Fahrzeug. Insbesondere ergeben sich Kostenvorteile für das notwendige Material und die Herstellung und Auslegungs- und Sicherheitsvorteile, die sich auf das Fahrzeug und dessen Konstruktion und Energieverbrauch vorteilhaft auswirken.

Gerade die ökologisch vorteilhaften Auswirkungen durch den reduzierbaren Material-Bedarf bzw. -Einsatz und den damit geschonten Ressourcen wie Energieverbrauch für die Bereitstellung des Gurtgestells und die positiven Folgen im Fahrzeugbetrieb, was insbesondere durch die Gewichtseinsparung erreicht ist, sind bedeutsam.

Durch die Erfindung kann eine zumindest gleiche mechanische Stabilität bei geringerem Gewicht durch eine geringere Dimensionierung gegenüber bisherigem Gurtgestell erreicht werden.

Bisher wird der Stützabschnitt mit seinem oberen Endabschnitt an vorhandenen geeigneten Abschnitten des verbleibenden Gurtgestells verbunden, die vergleichsweise deutlich unterhalb einer Sitzflächenhöhe bzw. einer Höhe der Oberseite des Sitzpolsters vorhanden sind. Bisher muss das Gurtgestell stabiler ausgelegt werden, da bei Zugbelastungen am Gurtgestell in Sitzrichtung starke Verformungen auftreten durch die zur vorliegenden Erfindung vergleichsweise größere Teilhöhe bzw. vertikale Länge des Gurtgestells oberhalb des Angriffsbereichs des Stützabschnitts am verbleibenden Teil des Gurtgestells. Denn an der Vertikalstütze treten unter anderem oberhalb der Sitzhöhe durch Zugkräfte an einer Gurtumlenkung im Bereich des oberen Endes des Gurtgestells erhebliche auslegungsrelevante Belastungen am Gurtgestell auf. Aufgrund einer insbesondere Momentenbelastung bzw. durch eine Hebelwirkung treten starke Verformungsbelastungen auf die Vertikalstütze auf, die mit dem Stützabschnitt teils abgefangen werden. Um die Belastungen in zulässigen Grenzen halten zu können, ohne dass zum Beispiel die Vertikalstützen sich zu stark elastisch und/oder plastisch verformen, muss bisher durch eine entsprechend hohe Stabilität der Vertikalstützen und weiteren Komponenten des Gurtgestells die Belastung kompensiert bzw. ausgeglichen werden.

Damit ist gegenüber der Erfindung ein erhöhter Materialbedarf notwendig bzw. eine größere Dimensionierung für ein entsprechend genutztes Gurtgestell.

Hier greift die Erfindung an. Bei der zugrunde zulegenden Zugbelastung auf das Gurtgestell im Belastungsfall durch eine in dem Fahrzeugsitz sitzende und mit dem Personenrückhaltesystem gesicherte Person, ist es hinsichtlich der in Sitzrichtung wirkenden Zugbelastung am Gurtgestell mechanisch vorteilhaft, den Angriffspunkt des Stützabschnitts nach oben bzw. in eine größere Höhe am Gurtgestell zu versetzen im Vergleich zu bisherigen Gurtgestellen. Eine wirkende Hebellänge am Gurtgestell, bei Zugkräften in Sitzrichtung im Belastungsfall durch über das Sicherheitsgurtsystem bzw. einen Gurtumlenker eingeleitete Kräfte wird durch die Erfindung verringert. Dabei ist eine Zugkrafteinleitungsstelle über den Gurtumlenker nicht beliebig nach unten am Gurtgestell versetzbar, also nicht praktikabel veränderbar, da eine Mindesthöhe des Gurtumlenkers am Gurtgestell durch einen Abstand nach oben durch eine Schulerhöhe der sitzenden Person bestimmt ist und nicht unterschritten werden kann.

Die Höhe des Angreifens des Stützabschnitts am restlichen Gurtgestell ist erfindungsgemäß maximal ausgelotet bzw. ausgelegt. Denn eine Nutzung des Fahrzeugsitzes ist praktikabel nur möglich, wenn der Stützabschnitt nicht in den von einer sitzenden Person eingenommen Raum hineinragt. In der praktischen Konstruktion des Fahrzeugsitzes und des Gurtgestells bedeutet dies, dass der obere bzw. nicht freie Endabschnitt des Stützabschnitts auf der Höhe der Oberseite des Sitzpolsters des mit dem Gurtgestell gebildeten Fahrzeugsitzes angreift.

Bei der Erfindung ist es zudem vorteilhaft, dass konstruktiv ohnehin notwendige vorhandene Bereiche am Gurtgestell genutzt werden, um daran die Anbindung des Stützabschnitts bzw. dessen oberen Endabschnitts vorzunehmen.

In der Regel ist der Stützabschnitt ein separater Bauteilabschnitt wie z. B. ein Hohl- oder Vollprofil insbesondere ein längliches gerades Rohr- oder Mehrkant-Hohlprofil. Der Stützabschnitt kann aber auch mehrteilig zusammengesetzt sein. Der Stützabschnitt kann auch ein integraler Teil wie z. B. eine integrale Verlängerung bzw. z. B. Fortsatz an einem anderen Teil des Gurtgestells sein wie z. B. an einem vertikalen Bauteil zum Beispiel an der Vertikalstütze oder einer Querstrebe.

Bevorzugt besteht der Stützabschnitt aus einem Stahlmaterial. Auch ist es bevorzugt, wenn alle anderen oder zumindest die überwiegenden Teile des Gurtgestells aus einem Stahlmaterial bestehen. Die Verbindung der Komponenten des Gurtgestells erfolgt durch eine Schweißverbindung und/oder eine andere Verbindungsart z. B lösbar oder unlösbar wie durch eine Schraubverbindung und/oder eine Clinch- und/oder eine Nietverbindung.

Gemäß der Erfindung hat es sich überraschend gezeigt, dass trotz einer gewissen Anpassung bzw. Änderung der bewährten bzw. etablierten Konstruktion des Gurtgestells, die oben diskutierten Vorteile erzielbar sind. Auch eine Neuauslegung des Stützabschnitts und dessen gegebenenfalls etwas größere Länge gemäß des erfindungsgemäßen Gurtgestells gegenüber bekannten Gurtgestellen ist trotz dem damit möglicherweise verbundenen höheren Gewicht und Materialverbrauch dieser einzelnen Gurtgestell-Komponente verglichen mit den erzielbaren Folgevorteilen unproblematisch bzw. dieser vermeintliche Nachteil wird durch die erzielten Vorteile mehr als kompensiert.

Vorteilhaft ist erfindungsgemäß der unterhalb der Sitzpolster-Oberseite am verbleibenden Teil des Gurtgestells angreifende Stützabschnitt auch praktikabel vorteilhaft realisierbar.

Vorzugsweise greift der Stützabschnitt bzw. das obere Stützabschnitt-Ende bzw. ein oberer Rand des Stützabschnitts benachbart unterhalb einer Höhe der Oberseite des Sitzpolsters der Sitzpolsterung an einem Abschnitt des verbleibenden Gurtgestells an. Der Stützabschnitt greift vorzugsw. unmittelbar bzw. nur wenige Millimeter versetzt zur Höhe bzw. einer Höhenlinie, die durch die Oberseite des Sitzpolsters festgelegt ist. Gegebenenfalls ist das im Nutzzustand des Fahrzeugsitzes kompressible Verhalten des Sitzpolsters zu beachten.

Die zumindest eine Vertikalstütze ist bevorzugt als Vierkant-Hohlprofil gestaltet, vorzugsweise aus Stahl mit einer Wandstärke zwischen 1 bis 3 Millimeter, bevorzugt circa 1,5 Millimeter. Bevorzugt weist die zumindest eine Vertikalstütze im Querschnitt eine Außenmaß von 20 bis 50 Millimeter auf.

Vorzugsweise weist das Gurtgestell, das für einen Zweier-Fahrzeugsitz ausgebildet ist, genau zwei über die gesamte Höhe des Gurtgestells sich vertikal erstreckende in Breitenrichtung gegenüberliegende äußere Vertikalstützen auf und eine mittlere vom oberen Ende bis zu einer unteren Querstrebe unterhalb des Querprofils verlaufende kürzere Vertikalstütze auf. Die drei Vertikalstützen weisen bevorzugt im Querschnitt jeweils ein Außenmaß von circa 50 mal 30 Millimeter auf, bevorzugt circa 40 mal 20 Millimeter.

Der Stützabschnitt ist insbesondere in der Art einer Auslegerstütze gestaltet. Der Stützabschnitt ist mit seiner Längsachse zumindest nahezu parallel zur Sitzrichtung ausgerichtet. Der Stützabschnitt ist vorzugsweise schräg zur Vertikalen bzw. zur Längsrichtung der Vertikalstütze nach vorne in Sitzrichtung vorstehend am Gurtgestell ausgebildet vorzugsweise von circa 45 Winkelgraden zur Längsachse der z. B. mehreren parallelen Vertikalstützen geneigt.

Es ist von Vorteil, dass das Querprofil am verbleibenden Teil des Gurtgestells im Bereich einer Höhe am verbleibenden Teil des Gurtgestells angreift, die einer Sitzflächenhöhe am Gurtgestell eines fertig montierten Fahrzeugsitzes entspricht. Zum Beispiel ist das Querprofil am Gurtgestell im Bereich einer Höhe des Gurtgestells vorhanden, welche durch die Oberseite eines Sitzflächenpolsters der Sitzpolsterung des mit dem Gurtgestell bildbaren Fahrzeugsitzes vorgegeben ist. Dadurch ist das Gurtgestell mechanisch und konstruktiv vorteilhaft ausgebildet im Hinblick auf eine Belastung des Fahrzeugsitzes und damit des Gurtgestells in einem Unfallszenario. Denn mit dem Querprofil auf Sitzflächenhöhe ist das Gurtgestell vorteilhaft mechanisch verstärkt bzw. versteift. Vorteilhaft ist das Gurtgestell in einem im Belastungsfall mechanisch belasteten Bereich vorhanden und reduziert bzw. minimiert mögliche plastische und/oder elastische Verformungen des Gurtgestells im Belastungsfall wie einem Aufprall des fahrenden Fahrzeugs auf ein Hindernis mit einer im Fahrzeugsitz sitzenden und mit dem Personenrückhaltesystem gesicherten Person.

Vorteilhaft ist das Querprofil am Gurtgestell in dem Bereich des Gurtgestells vorhanden, in dem der Stützabschnitt mit seinem oberen Endabschnitt am verbleibenden Teil des Gurtgestells angreift. Der Stützabschnitt ist vorzugsweise mit dem Querprofil fest verbunden. Damit werden insbesondere bei außergewöhnlichen hohen Belastungen wie einem Unfall- bzw. Crashszenario des betreffenden Verkehrsmittels bzw. Fahrzeugs Kräfte und/oder Momente vom Stützabschnitt über das Querprofil aufgenommen und vorteilhaft in den Fahrzeugboden abgeleitet. Das Gurtgestell ist aufgrund des Querprofils und des daran angreifenden Stützabschnitts vergleichsweise stabil und konstruktiv vorteilhaft gestaltet.

Das Querprofil auf Sitzflächenhöhe ist am betreffenden Fahrzeugsitz vorzugsweise im rückwärtigen Bereich einer Sitzfläche bzw. einer Sitzpolster-Oberseite des mit dem Gurtgestell bildbaren Fahrzeugsitzes vorhanden, vorzugsweise am Stück durchgehend. Das Querprofil verläuft bevorzugt horizontal entlang eines Bereichs bzw. eines Spaltbereichs bzw. hinter einem Spaltbereich, der sich zwischen einer rückseitigen Verlängerung der vom Sitzflächenpolster gebildeten Sitzfläche bzw. einer Oberseite des Sitzpolsters und einem unteren Ende eines aufrecht stehenden Rückenlehnenpolsters der Sitzpolsterung des mit dem Gurtgestell bildbaren Fahrzeugsitzes ausbildet.

Vorteilhaft ist die Anbindung des oberen Endes des Stützabschnitts am restlichen Gurtgestell im Bereich des Querprofils vorhanden. Der obere Endabschnitt des Stützabschnitts ist vorzugsweise mit dem Querprofil verbunden, unlösbar verbunden oder vorzugsweise lösbar mechanisch stabil befestigt.

Vorzugsweise erstreckt sich das Querprofil rechtwinklig zu den z. B. mehreren Vertikalstützen. Die Vertikalstützen stehen in der Regel senkrecht zu einer vom Fahrzeugboden vorgegebenen Ebene im montierten Zustand des Gurtgestells im Fahrzeug.

Das Querprofil erstreckt sich vorzugsweise über die gesamte Breite bzw. Nutzbreite des mit dem Gurtgestell bildbaren Fahrzeugsitzes bzw. über die gesamte Breite der Sitzpolsterung.

Am fertigen Fahrzeugsitz bzw. von außen sind die Vertikalstützen und das Querprofil in aller Regel nicht sichtbar bzw. überdeckt von der Sitzpolsterung.

Das Querprofil erstreckt sich vorzugsweise über sämtliche horizontal zueinander versetzte mehrere Vertikalstützen des Gurtgestells, wenn zwei oder mehr als zwei Vertikalstützen vorgesehen sind.

Vorzugsweise erstreckt sich das Querprofil über die gesamte Breite des Gurtgestells. Bei mehreren Vertikalstützen erstreckt sich das Querprofil vorzugsweise horizontal und seitlich außen überstehend zu einer oder zu beiden von zwei in Breitenrichtung des Gurtgestells bzw. des damit bildbaren Fahrzeugsitzes gegenüberliegenden äußeren Vertikalstützen.

Das Querprofil ist vorzugsweise mit sämtlichen auf der betreffenden bzw. dazugehörigen Höhe des Gurtgestells Vorhandenen Vertikalstützen fest verbunden zum Beispiel mit diesen verschweißt oder an diesen angeschraubt.

Ein weiterer Vorteil ergibt sich daraus, dass am Querprofil ein Verankerungsabschnitt eines Befestigungssystems für die Befestigung eines Kindersitzes an dem Fahrzeugsitz ausgebildet ist.

Das Querprofil ist mechanisch und konstruktiv vorteilhaft geeignet, daran den Verankerungsabschnitt umfassend Halteelemente wie Haltebügel bzw. Halteösen eines insbesondere standardisierten Isofix-Befestigungssystems für die lösbare sichere Befestigung eines Kindersitzes am Fahrzeugsitz vorzusehen. Denn auf dieser Höhe lässt sich am mit dem Gurtgestell gebildeten Fahrzeugsitz ein auf dem Sitzpolster aufsitzender separater Kindersitz mit Halterasten, die unten vorstehend am Kindersitz vorgesehen sind, vorteilhaft mit den Haltebügel lösbar verbinden bzw. verrasten. Dabei reichen die insbesondere genau zwei Halterasten des Kindersitzes durch den Spaltbereich der Sitz-Polsterung durch, genau dort, wo die Haltebügel am Querprofil vorhanden sind. Jede Halteraste verrastet, jeweils an dem dazugehörigen Haltebügel.

Jeder Haltebügel des Verankerungsabschnitts bildet vorzugsweise in schlaufenartiger Form einen geschlossenen Befestigungsbügel. Pro Sitzplatz des Fahrzeugsitzes kann genau ein Kindersitz befestigt werden. Pro Sitzplatz des mit dem Gurtgestell bildbaren Fahrzeugsitzes sind vorteilhaft zwei bzw. paarweise und vorzugsweise gleichartige Befestigungsbügel vorhanden. Die Verankerungsabschnitte sind in Längsrichtung des Querprofils beabstandet bzw. versetzt zueinander beabstandet, und insbesondere auf einer gemeinsamen Höhe bzw. in horizontaler Ausrichtung am Gurtgestell vorhanden.

Vorzugsweise sind pro Sitzplatz des mit dem Gurtgestell bildbaren Fahrzeugsitzes genau zwei z. B. Haltebügel des Verankerungsabschnitts vorgesehen. Die z. B. Haltebügel sind am Querprofil bevorzugt an dessen Vorderseite in Sitzrichtung vorstehend am Querprofil ausgebildet. Der Verankerungsabschnitt ist bevorzugt ein Teil eines standardisierten Befestigungssystems nach Norm ISO 13216 bzw. eines sogenanntes Isofix-Befestigungssystems zur Anordnung eines Kindersitzes. Dabei ist eine starre Verbindung zwischen einer Karosserie des Fahrzeugs und dem Kindersitz über das Gurtgestell einrichtbar. Die beiden Halterasten am Kindersitz sind in Breitenrichtung wie auch die beiden Haltebügel am Querprofil in dessen Längsrichtung standardisiert 280 Millimeter beabstandet voneinander bzw. versetzt zueinander.

Es ist vorteilhaft, wenn ein Querträger des Gurtgestells vorhanden ist, welcher quer zur zumindest einen Vertikalstütze ausgerichtet ist, wobei der Querträger unterhalb des Querprofils vorhanden ist. Vorzugsweise sind genau ein Querträger und genau ein Querprofil vorhanden. Der Querträger ist am Gurtgestell unterhalb bzw. auf einer geringeren Höhe als der Sitzflächenhöhe des Gurtgestells des fertig montierten Fahrzeugsitzes vorhanden. Bevorzugt ist der Querträger vertikal nach unten um circa 150 Millimeter beabstandet zum Querprofil. Der Querträger und das Querprofil sind vorzugsweise zumindest annähernd parallel ausgerichtet. Vorzugsweise ist das Querprofil über dem Querträger bzw. oberhalb des Querträgers vorgesehen. In der Regel ist bis auf die eine Vertikalstütze oder bis auf die mehreren Vertikalstützen, die abschnittsweise quer zwischen dem Querträger und dem Querprofil verlaufen, ein überwiegend materialfreier Bereich vorhanden.

Das Querprofil und der Querträger können identisch in Form und Abmessung sein, was die Herstellung erleichtert. Das Querprofil und der Querträger können sich auch unterscheiden in Form und/oder Abmessungen. Querprofil und/oder Querträger können beispielsweise ein Rohr-, Oval-, Vierkant-, Mehrkant- oder Flach-Profil sein, bevorzugt aus einem Stahl- oder Leichtmetall-Material.

Querprofil und Querträger dienen z. B. auch jeweils insbesondere der Anbindung von Elementen des Personenrückhaltesystems und/oder der Sitzpolsterung und/oder der Befestigungsstruktur für einen Kindersitz wie einem Isofix-System. Das Querprofil und der Querträger dienen zudem der Erhöhung der mechanischen Stabilität des Gurtgestells und damit des Fahrzeugsitzes bzw. zur Versteifung, insbesondere für Höchstbelastungen bei einem Crashszenario mit einer in dem Fahrzeugsitz gesicherten Person.

Bevorzugt sind der Querträger und/oder das Querprofil als Vierkant-Hohlprofil gestaltet, vorzugsweise aus Stahl mit einer Wandstärke z. B. zwischen 1 bis 3 Millimeter, bevorzugt circa 1,5 Millimeter. Bevorzugt weisen der Querträger und/oder das Querprofil im Querschnitt eine Außenmaß von 30 bis 50 Millimeter auf, vorzugsweise im Querschnitt ein Außenmaß von 35 mal 35 Millimeter.

Der Querträger ist vorzugsweise ein zum Querprofil separates Teilelement des Gurtgestells. Der Querträger ist insbesondere länglich und erstreckt sich in seiner Längsrichtung bevorzugt über die gesamte Breite des mit dem Gurtgestell bildbaren Fahrzeugsitzes.

Das Querprofil weist im Einbauzustand eine horizontale LängsAusrichtung auf.

Das Stützelement ist in seiner Längserstreckung quer und vorzugsweise schräg zur Vertikalstütze und quer zum Querträger ausgerichtet.

Der Stützabschnitt reicht mit seinem oberen Endabschnitt insbesondere über den Querträger hinaus bis zum Querprofil.

Eine vorteilhafte Ausgestaltung sieht vor, dass das Gurtgestell ein Querprofil aufweist, an dem seitlich bzw. stirnseitig ein Verbindungsabschnitt mit einer Verbindungsstelle zur Anbringung eines Elements des Personenrückhaltesystems wie eines Gurtaufrollers vorhanden ist. Der Verbindungsabschnitt erstreckt sich zum Beispiel nach unten, so dass die Anbringstelle für z. B. den Gurtaufroller sich unterhalb der Sitzflächenhöhe befindet. Am Querprofil greift zudem der obere Endabschnitt des Stützabschnitts an. Am Querprofil sind vorzugsweise Haltebügel für das Isofix-Befestigungssystem vorhanden. Das Querprofil ist bevorzugt durch ein Mehrkant-Hohlprofil gebildet. Außerdem ist ein als hochkant stehendes Flachmaterial vorhanden als Querträger. Das z. B. streifenförmige Flachmaterial weist eine schmale rechteckförmige Oberseite auf, deren Längsrichtung sich der in Breitenrichtung des Gurtgestells erstreckt. Am Flachmaterial bzw. dem Querträger ist ein Element des Personenrückhaltesystems wie genau ein Gurtschloss bei einem Gurtgestell für einen Einersitz oder sind zwei Elemente des Personenrückhaltesystems bei einer Zweier-Sitzbank wie zwei Gurtschlösser anbringbar bzw. angebracht. Das Flachmaterial ist in Längsrichtung vorzugsweise parallel zum Querprofil ausgerichtet, wobei das Flachmaterial bevorzugt nicht oder nur unwesentlich seitlich an zum Beispiel den beiden in Breitenrichtung äußeren Vertikalstützen übersteht.

Vorzugsweise steht das Querprofil jedoch an einer oder an beiden äußeren Vertikalstützen seitlich z. B. jeweils um wenige Zentimeter über. Bei einem Zweiersitzbank-Gurtgestell erstreckt sich die mittlere von drei Vertikalstützen von einem oberen Gurtgestell-Abschnitt nach unten bis zum Querträger, die beiden äußeren Vertikalstützen jedoch vom oberen Gurtgestell-Abschnitt bis zum unteren Ende des Gurtgestells, wo eine Anbindungsmöglichkeit für das Gurtgestell am Fahrzeugboden gebildet ist.

Gemäß einem weiteren Vorteil ist am Querprofil ein Verankerungsabschnitt eines Befestigungssystems für die Befestigung eines Kindersitzes an dem Fahrzeugsitz ausgebildet und zusätzlich ist am Querprofil ein Element des Personenrückhaltesystems aufgenommen. Damit kann das Gurtgestell vergleichsweise einfach, mit einem geringeren Gewicht und materialsparend gestaltet sein. Insbesondere ist am Gurtgestell kein separates Element wie ein Querträger nötig, an dem üblicherweise Elemente des Personenrückhaltesystems wie ein Gurtaufroller und/oder ein Gurtschloss befestigt sind. Denn beispielsweise über ein am Querprofil angebrachtes Zwischenelement oder bzw. Verbindungselement können an dem Querprofil Elemente des Personenrückhaltesystems angebracht werden, zusätzlich zum Verankerungsabschnitt des Kindersitz-Befestigungssystems. Das Zwischenelement kann bei einem Gurtgestell für einen Zweiersitz durch zum Beispiel jeweils ein stirnseitig nach unten abgewinkelten Flachstahl am Querprofil gebildet sein.

Das Gurtgestell kann dadurch vorteilhaft zum Beispiel mit genau einem quer zu der zumindest einen Vertikalstütze verlaufenden Element wie insbesondere dem Querprofil auskommen.

Vorteilhafterweise ist der Stützabschnitt am Querprofil angebracht. Damit kann je nach Art und z. B. Positionierung des Fahrzeugsitzes im Fahrzeug der Fahrzeugsitz hinsichtlich des Stützabschnitts angepasst werden, insbesondere im Hinblick auf die mechanische Auslegung des Gurtgestells. Der Stützabschnitt ist vorzugsweise fest bzw. positionsfest angebracht am Querprofil. Der Stützabschnitt ist zum Beispiel angeschweißt an oder fest verschraubt mit dem Querprofil.

Der Stützabschnitt ist demgemäß in Längsrichtung des Querprofils an einer vorgebbaren festgelegten Stelle befestigt am Querprofil.

Eine vorteilhafte Variante zeichnet sich dadurch aus, dass der Stützabschnitt in Längsrichtung des Querprofils verstellbar angebracht ist, vorzugsweise in Längsrichtung des Querprofils verstellbar angebracht ist. Mit der Verstellbarkeit des Stützabschnitts relativ zum Querprofil und damit zum verbleibenden Teil des Gurtgestells kann der Stützabschnitt vorteilhaft über die z. B. gesamte Breite des Gurtgestells an jeweils einer Breitenposition von unterschiedlichen möglichen Breitenpositionen am verbleibenden Gurtgestell angreifen. Hierfür sind am Querprofil z. B. mehrere Stellen vorbereitet, um an jeweils genau einer Stelle des Querprofils an diesem jeweils mit z. B. Verbindungsmitteln den Stützabschnitt bzw. dessen oberer Endabschnitt anzubringen. Die Anbringung des Stützabschnitts an unterschiedlichen Längspositionen am Querprofil ist vorzugsweise lösbar aber mechanisch fest, zum Beispiel durch Steck-, Rast- und/oder Schraubmittel.

Der Stützabschnitt ist demgemäß über den oberen Endabschnitt am Querprofil fixiert und verstellbar, in seiner Befestigungsposition. Der Stützabschnitt greift auf die Breitenabmessung des Gurtgestells bezogen mittig oder bevorzugt etwas versetzt zur Mitte des Gurtgestells am verbleibenden Teil, des Gurtgestells an. Bevorzugt umgreift der obere Endabschnitt des Stützabschnitts oder das dazugehörige Verbindungsmittel den Verankerungsabschnitt für die Befestigung eines Kindersitzes am Fahrzeugsitz, zum Beispiel einen Haltebügel.

Nach einer vorteilhaften Modifikation ist das Querprofil im Bereich einer Höhe des Gurtgestells von 570 bis 600 Millimeter oder im Bereich einer Höhe des Gurtgestells von 450 bis 480 Millimeter vorhanden. Die genannte Höhe des Gurtgestells ergibt sich mit einer Höhe "Null" am bzw. vom unteren Ende der Vertikalstütze, wobei das untere Ende vorgesehen ist, am bzw. mit dem Fahrzeugboden verbunden zu werden.

Das Querprofil ist z. B. im Bereich einer mittleren Höhe des Gurtgestells vorgesehen, zum Beispiel vorzugsweise in einem mittleren Höhenabschnitt gleichermaßen beidseitig der Höhenmitte beispielsweise innerhalb eines Höhenabschnitts, der 20 Prozent der Gesamthöhe des Gurtgestells darstellt.

Zum Beispiel kann sich es ergeben, dass bei einem Fahrzeug mit Frontantrieb, wenn das Gurtgestell für einen Sitz hinter der Sitzreihe mit dem Fahrer- und Beifahrersitz vorgesehen ist, z. B. in zweiter oder dritter Reihe, das Querprofil vorzugsweise im Bereich von 570 bis 600 Millimeter von unten gerechnet am Gurtgestell vorhanden ist. Bei einem Fahrzeug mit z. B. Heckantrieb kann sich die Höhe des Querprofils vorzugsweise im Bereich von 450 bis 480 Millimeter von unten gerechnet am Gurtgestell ergeben.

Vorteilhaft ist es, wenn am Querträger ein Element des Personenrückhaltesystems angebracht ist. Dies ist vorteilhaft, da eine ideale Anbringstelle für z. B. einen Gurtaufroller und/oder ein Gurtschloss des Personenrückhaltesystems in der Regel auf einer Höhe liegt, die geringer ist als die Sitzflächenhöhe am Gurtgestell. Daher ist bei Vorhandensein des Querträgers zusätzlich zum Querprofil es vorteilhaft, den Querträger zu nutzen, um daran ein Element des Personenrückhaltesystems anzubringen. Am Querprofil ist es demgegenüber vorteilhaft, Elemente des z. B. Isofix-Befestigungssystems vorzusehen und nicht am Querträger. Denn die gurtgestellseitigen Elemente des Isofix-Befestigungssystems sind regelmäßig oberhalb der bzw. auf einer größeren Höhe am Gurtgestell vorhanden als die Elemente des Personenrückhaltesystems wie ein Gurtschloss und ein Gurtaufroller.

Dies ist vorteilhaft gegenüber einer Anbindung von sowohl Elementen des Personenrückhaltesystems und des Kindersitz-Befestigungssystems allein an genau einem Querprofil wie dem Querträger oder dem Querprofil.

Vorzugsweise sind genau zwei Profile, die quer zur zumindest einen Vertikalstütze verlaufen am Gurtgestell vorhanden, also genau ein Querträger zusätzlich zum genau einen Querprofil. Vorzugsweise ist genau ein Querträger und oberhalb beabstandet genau ein Querprofil am Gurtgestell vorgesehen. Das am Querträger vorgesehene Element des Personenrückhaltesystems ist zum Beispiel ein Gurtaufroller und/oder ein Gurtschloss eines Sicherheitsgurtsystems wie eines Dreipunkt-Sicherheitsgurtsystems. Demgemäß werden im Belastungsfall mit einer gesicherten im Fahrzeugsitz sitzenden Person Zugkräfte und Momente über das Element des Personenrückhaltesystems in den Querträger und damit das Gurtgestell übertragen bzw. eingeleitet.

Am Querträger ist zumindest eine passend vorbereitete Anbringstelle für die Anbringung eines Elements des Personenrückhaltesystems vorzugsweise eines Gurtaufrollers oder eines Gurtschlosses vorhanden.

Bei einem Gurtgestell, das für eine Zweier- oder Mehrfach-Sitzbank ausgestaltet ist, sind vorzugsweise mindestens an beiden bzw. jedem Längsende des Querträgers jeweils eine jeweilige Anbringstelle für ein Element des Personenrückhaltesystems vorgesehen.

Nach einer optionalen Ausgestaltung der Erfindung ist der Stützabschnitt über ein Verbindungsprofil, das zwei gegenüberliegenden Anlageschenkel aufweist, an dem Querprofil angebracht, wobei das Verbindungsprofil ausgebildet ist, einen Teil einer Oberseite des Querprofils und einen Teil einer Unterseite des Querprofils zu überdecken. Damit wird eine stabile und flexibel positionierbare Anbringung des Stützabschnitts am Querprofil ermöglicht.

Vorzugsweise ist der Verbindungsabschnitt als ein Stahl- bzw. Blechbauteil gestaltet mit Anlageschenkel die beispielsweise zwei flächige parallele plattenartige Anlageschenkel umfassen. Zum Beispiel überdeckt ein oberer Anlageschenkel bzw. ist in Anlage an einer Oberseite des Querprofils. Ein unterer Anlageschenkel überdeckt bzw. ist in Anlage an einer der Oberseite gegenüberliegende Unterseite des Querprofils. Das Verbindungsprofil ist z. B. in der Art eines U-förmigen Profils mit einer zur Sitzrichtung abgewandten offenen Seite, z. B. als ein einseitig offenes Winkelblech gebildet.

Das Verbindungsprofil und das Querprofil sind vorzugsweise so abgestimmt, dass das Verbindungsprofil, und damit der daran mit seinem oberen Endabschnitt angreifende Stützabschnitt, verstellbar entlang der Länge des Querprofils daran an unterschiedlichen Positionen am Querprofil anbringbar ist.

Damit ist Breitenposition des Stützabschnitts am Gurtgestell veränderbar bzw. wählbar.

Eine vorteilhafte Abwandlung besteht darin, dass das Verbindungsprofil eine Aussparung aufweist, durch welche der Verankerungsabschnitt des Befestigungssystems für die Befestigung des Kindersitzes an dem Fahrzeugsitz durchreicht. Da in der Regel an dem Querprofil zwei oder ein Mehrfaches von zwei Verankerungsabschnitte wie Haltebügel vorgesehen sind, sind diese vorteilhaft für eine feste Verbindung nutzbar zur Befestigung des Stützabschnitts am Querprofil. Mit dem Durchgreifen des,Verankerungsabschnitts durch vorzugsweise eine passend darauf abgestimmte Ausnehmung an einem Abschnitt des Verbindungsprofils ist eine einfache und verrutschsichere Verbindung des Stützabschnitts am verbleibenden Teil des Gurtgestells möglich. Die Ausnehmung am Verbindungsprofil ist zum Beispiel eine schlitzartige Materialaussparung, durch welche beispielhaft ein bügelförmiger Haltebügel des Isofix-Befestigungssystems am Querprofil durchgreift. Der bzw. die Befestigungsbügel sind vorzugsweise verschweißt an einer Vorderseite des Querprofils, so dass die Ausnehmung entsprechend an dem Teil des Verbindungsprofils vorhanden ist, welcher die Vorderseite des Querprofils überdeckt.

Auch ergibt sich ein Vorteil damit, dass das Verbindungsprofil am oberen Endabschnitt des Stützabschnitts vorhanden ist. Damit ist der obere Endabschnitt des Stützabschnitts am Querprofil vorteilhaft angebracht bzw. anbringbar. Der Stützabschnitt ist zum Beispiel vorzugsweise ein Hohlprofil, an dessen oberem Endabschnitt das Verbindungsprofil vorhanden ist, z. B. angeschweißt ist. Das Verbindungsprofil umfasst z. B. drei winklig stehende Anlageschenkel. Die Anlageschenkel am oberen Endabschnitt des Stützabschnitts umgreifen eine Vorderseite, eine Oberseite und eine Unterseite am Querprofil.

Vorteilhafterweise ist der Querträger am Gurtgestell in einem Bereich einer Höhe des Gurtgestells vorhanden ist, in welchem eine Auflage für ein Sitzflächenpolster der Sitzpolsterung ausgebildet ist. Das Sitzflächenpolster ist Teil einer Sitzpolsterung des mit dem Gurtgestell bildbaren Fahrzeugsitzes. Die unterhalb einer Unterseite des Sitzflächgenpolsters vorhandene Auflage für das Abstützen des Sitzpolsters ist z. B. durch eine horizontale Platte, ein Rahmen oder eine Oberseite eines Sitzkastens des mit dem Gurtgestell bildbaren Fahrzeugsitzes realisiert. Demgemäß ist der Querträger etwas unterhalb einer Sitzflächenhöhe am Gurtgestell vorhanden. Der Querträger befindet sich unterhalb des Querprofils vorzugsweise in einem Maß zum Querprofil beabstandet, das mit einem Maß einer Dicke des Sitzpolsters korreliert.

Der Querträger ist unterhalb bzw. vertikal beabstandet vom Querprofil, insbesondere existiert ein vertikaler Zwischenbereich zwischen Oberseite der Querträgers und Unterseite des Querprofils.

Ein weiterer Vorteil besteht darin, dass das Querprofil an der Vertikalstütze aufgenommen ist. Vorzugsweise ist das Querprofil an sämtlichen vorhandenen Vertikalstützen aufgenommen, wenn mehr als eine Vertikalstütze vorgesehen sind. Die insbesondere zwei, z. B. drei oder zum Beispiel vier Vertikalstützen des Gurtgestells sind vorzugsweise parallel zueinander ausgerichtet. Das Querprofil ist vorzugweise identisch an den Vertikalstützen aufgenommen. An der jeweiligen Vertikalstütze ist vorzugsweise ein Aufnahme vorbereitet zum Beispiel eine nach vorne in Sitzrichtung offene Ausnehmung zur passenden teilweisen Umgreifung von Abschnitten einer Oberseite, Rückseite und Unterseite des Querprofils. Das Querprofil ist an den Vertikalstützen vorzugsweise zumindest teilweise versenkt untergebracht über eine Länge des Querprofils, die der Breite der Vertikalstütze im Bereich von z. B. 40 Millimeter entspricht.

Das längliche Querprofil ist vorzugsweise einstückig bzw. durchgehend ausgebildet. Das Querprofil ist vorzugsweise nicht am Querträger angebracht. Daher ergibt sich regelmäßig ein vertikaler Zwischenraum bzw. Abstand zwischen Querprofil und Querträger. Zur Herstellung sind der Querträger und das Querprofil aus vorzugsweise separaten Bauteilen gebildet, die identisch oder unterschiedlich sein können. Der Querträger ist vorzugsweise ebenfalls an dem zumindest einen Vertikalstütze vorzugsweise an sämtlichen Vertikalstützen angebracht, zum Beispiel auf bzw. an einer Vorderseite der jeweiligen Vertikalstütze angebracht.

Es ist außerdem vorteilhaft, dass das Verbindungsprofil benachbart zur Vertikalstütze am Querprofil angreift. Dies ist aus konstruktiven und/oder mechanischen Gründen vorteilhaft. Kräfte, die insbesondere in einem Crash-Szenario über Elemente des Personenrückhaltesystem am Gurtgestell auf die Vertikalstütze und das Querprofil wirken, können vorteilhaft über den Stützabschnitt nach unten und vorne bzw. in den Fahrzeugboden eingeleitet werden. Durch den Angriff des Stützabschnitts auf Sitzflächenhöhe bzw. am Querprofil erfolgt dies vorteilhaft in einem vergleichsweise weniger in Sitzrichtung sich biegenden Bereich der Vertikalstütze. Denn die z. B. mehreren Vertikalstützen verbiegen sich angenähert bananenförmig nach vorne bzw. bogenförmig durch Zugkräfte über den Gurtaufroller und das Gurtschloss etwas unterhalb der Sitzflächenhöhe und am oberen Endabschnitt der Vertikalstützen durch Gurtumlenkelemente am oberen Ende der Vertikalstützen. Der vorteilhafte Stützabschnitt auf Sitzflächenhöhe wirkt gegenüber bisherigen Gurtgestellen vorteilhaft bzw. ist gegenüber einem plastischen Versagen der Vertikalstützen im Bereich des Angriffs des Stützabschnitts am verbleibenden Gurtgestell stabiler. Bisher ist es bei höchsten Belastungsspitzen nicht ausgeschlossen, dass an der stabilisierten Stelle am Gurtgestell auf Höhe des versteiften Bereichs durch das angreifende Stützbein zu einem plastisch so gravierenden Verformen bzw. im Grenzfall zu einem Versagen durch Abknicken der Vertikalstütze nach vorne kommt, was extrem nachteilig ist. Das Risiko eines solchen Versagensfalls wird erfindungsgemäß reduziert. Dies kann sogar bei reduziertem Gesamtgewicht erreicht werden.

Bisherige Gurtgestelle stützen zwar am Fahrzeugsitz hinsichtlich der unteren am Gurtgestell relevanten Krafteinleitungspunkte vergleichsweise stabil ab, wobei die Krafteinleitungspunkte sich über Gurtaufroller und Gurtschloss ergeben. Dort findet die Abstützung in einer gegenüber der Erfindung geringeren durch das angreifende Stützbein statt, also auf geringerer Höhe als die Höhe der Sitzfläche. Diese bekannte Konstruktion ist aber nachteilig aufgrund einer größeren Hebelarmlänge vom oberen Ende der Vertikalstützen bis zum Abstützbereich am Angriffspunkt des Stützbeins, die sich aus den oben an den Vertikalstützen wirkenden Zugkräften am Gurtumlenker definieren.

An einem Gurtgestell ist es außerdem nicht möglich, die dazugehörigen Angriffspunkte für die Elemente Gurtschloss und Gurtaufroller am Gurtgestell nach oben am Gurtgestell zu versetzen, da ansonsten in einem Crash-Szenario ein Hüftgurtabschnitt des Sicherheitsgurtsystems sich in einen Weichteilbereich einer Person einschneiden würde, die in dem mit dem Gurtgestell bildbaren Fahrzeugsitz gesichert sitzt. Diese grundlegende Sicherheitsanforderung muss immer erfüllt werden. Gurtschloss und Gurtaufroller müssen daher unterhalb der Sitzflächenhöhe verbleiben, zum Beispiel im Bereich von circa 100 Millimetern unterhalb der Sitzflächenhöhe am Gurtgestell. Daher ist es nicht praktikabel möglich, den Gurtaufroller und das Gurtschloss merklich nach oben am Gurtgestell zu versetzen. In der Regel wird zur Anbindung von Gurtschloss und Gurtaufroller die Querstrebe genutzt, unterhalb einer Sitzflächenhöhe.

Insbesondere aus mechanischen Gründen ist es vorteilhaft, dass mehrere Vertikalstützen horizontal beabstandet voneinander vorhanden sind. Das Gurtgestell, mit dem eine Zweiersitzbank bildbar ist, weist vorzugsweise drei Vertikalstützen auf. Bevorzugt sind eine kürzere und zwei in Breitenrichtung äußere längere Vertikalstützen vorhanden, also genau drei Vertikalstützen für einen Zweier-Fahrzeugsitz.

Bei zwei oder mehr insbesondere zueinander parallelen Vertikalstützen erstreckt sich das Querprofil vorzugsweise über den Zwischenraum bzw. überbrückt einen Abstand zwischen zwei horizontal benachbarten Vertikalstützen. Innerhalb des betreffenden horizontalen Bereichs bzw. des Abstands greift der obere Endabschnitt des Stützabschnitts direkt an oder indirekt über z. B. das Verbindungsprofil. Vorzugsweise sind genau zwei seitlich außen gegenüberliegende Vertikalstützen vorhanden, die jeweils außen in Breitenrichtung vorhanden sind am Gurtgestell. Je eine Vertikalstütze bildet eine seitliche vertikal sich erstreckende Struktur. Bei einem Gurtgestell für einen Zweiersitz ist zwischen den beiden äußeren Vertikalstützen, vorzugsweise genau eine dritte Vertikalstütze mittig und parallel zu den beiden anderen Vertikalstützen vorgesehen. Alternativ sind auch z. B. wenigstens zwei mittlere Vertikalstützen vorzugsweise symmetrisch am Gurtgestell vorgesehen.

Die mittige Vertikalstütze ist mit ihrem oberen Ende auf Höhe der beiden äußeren Vertikalstützen, verlängert sich aber vorzugsweise nicht bis zu einem unteren Ende des Gurtgestells, sondern endet an der unter der Sitzflächenhöhe vorgesehenen Querstrebe.

Die Erfindung erstreckt sich auf einen Fahrzeugsitz mit einem Gurtgestell nach einer der oben beschriebenen Ausführungen. Der Fahrzeugsitz ist als Einer-Fahrzeugsitz, als Zweier-Fahrzeugsitz oder als Sitzbank ausgebildet, um eine Person oder zwei, drei oder mehr als drei Personen eine Sitzmöglichkeit mit jeweils einem Personen-Rückhaltesystem bereitzustellen, insbesondere mit Dreipunktsicherheitssystem.

Der Fahrzeugsitz weist insbesondere als Anbauteile am Gurtgestell neben Einstellmittel zur Einstellung des Fahrzeugsitzes insbesondere eine Sitz-Polsterung und dergleichen auf. Im fertigen Zustand ist das Gurtgestell, gegebenenfalls abgesehen von einem unteren Teil des Stützabschnitts verdeckt von der Sitzpolsterüng.

### Figurenbeschreibung

Weitere Merkmale und Vorteile der Erfindung sind anhand schematisch gezeigter Ausführungsbeispiele näher erläutert. Im Einzelnen zeigt:
- Fig. 1: ein Gurtgestell perspektivisch schräg von oben vorne mit Elementen eines Personenrückhaltesystems und eines Isofix-Befestigungssystems,
- Fig. 2: das Gurtgestell gemäß Fig. 1 perspektivisch schräg von oben hinten,
- Fig. 3-6: das Gurtgestell aus Fig. 1 in einer Vorderansicht, von einer ersten Seite, von einer zweiten Seite und von oben,
- Fig. 7: ein zu Fig. 1 alternatives Gurtgestell perspektivisch schräg von vorne und
- Fig. 8: einen stark schematisierten Fahrzeugsitz von der Seite umfassend ein Gurtgestell und eine Sitz-Polsterung.

Für sich entsprechende Elemente unterschiedlicher Ausführungsbeispiele sind in den Figuren teils die gleichen Bezugszeichen verwendet.

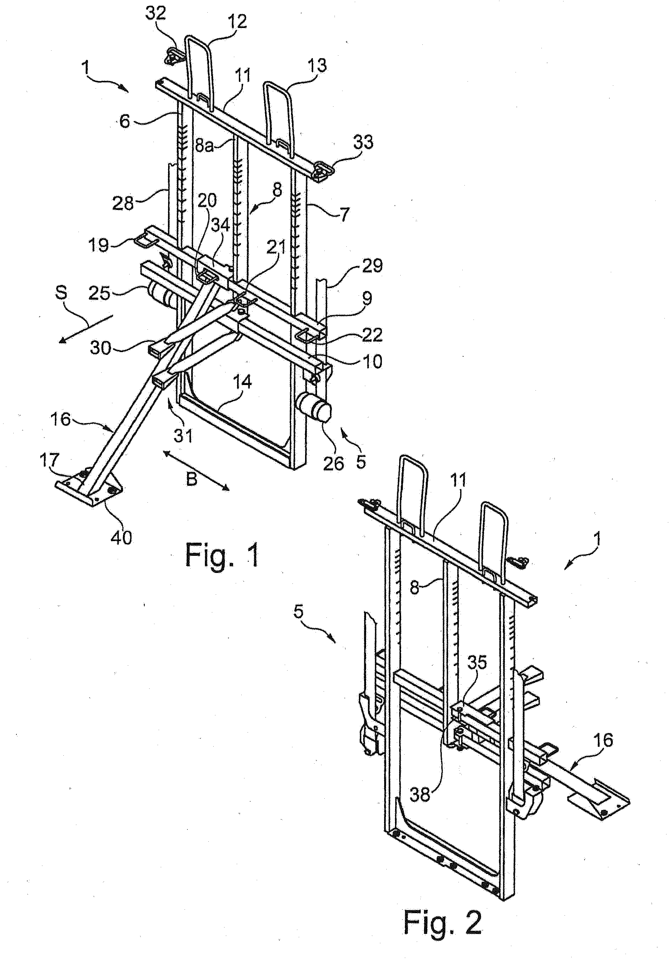

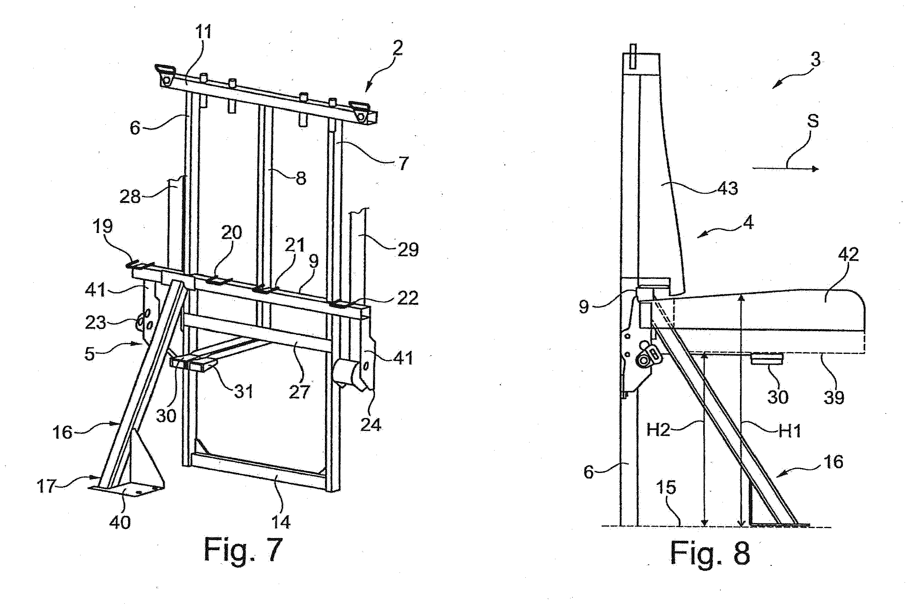

Die Figuren 1 bis 6 zeigen ein Gurtgestell 1 für einen mit dem Gurtgestell 1 erstellbaren Verkehrsmittelsitz oder Fahrzeugsitz, der als zweier-Fahrzeugsitz ausgebildet ist. Ein Fahrzeugsitz 3, der mit einem zum Beispiel gemäß Fig. 7 gestalteten Gurtgestell 2 gebildet ist, welches ein zum Gurtgestell 1 alternatives Gurtgestell ist, zeigt Fig. 8 schematisiert. Auch das Gurtgestell 2 ist für einen Zweier-Fahrzeugsitz gestaltet.

Das Gurtgestell 1 wie auch das Gurtgestell 2 ist zur Anordnung einer Sitzpolsterung 4 und eines Personenrückhaltesystems 5 an dem Fahrzeugsitz 3 ausgebildet, um mit dem Personenrückhaltesystem 5 eine in Sitzrichtung S im montierten Fahrzeugsitz sitzende Person oder zwei im Fahrzeugsitz 3 nebeneinander sitzende Personen zu sichern.

Das Gurtgestell 1 gemäß der Fig. 1 bis 6 umfasst drei Vertikalstützen 6, 7 und 8, wobei zwei gegenüberliegende seitlich äußere längere Vertikalstützen 6 und 7 und eine in einer Breitenrichtung B des Gurtgestells 1 bzw. des Fahrzeugsitzes 3 mittlere Vertikalstütze 8 vorhanden sind. Die beiden Vertikalstützen 6 und 7 erstrecken sich über die wesentliche bzw. gesamte Höhe des Gurtgestells 1. Das Gurtgestell 1 weist zudem ein Querprofil 9 auf, dessen Längsachse senkrecht zu den Längsachsen der parallelen Vertikalstützen 6-8 und senkrecht zur Sitzrichtung S ausgerichtet ist, im Nutzzustand bei eben stehendem Fahrzeug horizontal ausgerichtet.

Unterhalb des Querprofils 9 und zu diesem parallel verlaufend ist ein Querträger 10 entsprechend der Länge des Querprofils 9 vorhanden. Der Querträger 10 ist wie das Querprofil 9 ebenfalls als Vierkant-Hohlprofil gestaltet und dient zur Anbringung von Elementen des Personenrückhaltesystems 5. Konkret sind am , Querträger 10 zwei Gurtaufroller 25, 26 mit daran aufrollbarem Sicherheitsgurtabschnitt 28, 29 (nur abschnittsweise dargestellt) und zwei Gurtschlösser 30, 31 vorhanden. Die Gurtschlösser 30, 31 sind jeweils über einen kurzen Gurtabschnitt angebracht am Querträger 10. Weitere Elemente des Personenrückhaltesystems sind zwei Gurtumlenker 32, 33 (ohne Gurtgestell-Anbindung gezeigt) außen an einem oberen Querholm 11. Das Personenrückhaltesystem 5 ist als an sich bekanntes Dreipunkt-Sicherheitsgurtsystem ausgebildet für beide Sitzplätze des Fahrzeugsitzes 3.

An dem oberen quer zu den Vertikalstützen 6-8 verlaufenden Querholm 11, der die jeweiligen obere Enden der drei Vertikalstützen 6-8 verbindet, sind nach oben abstehend zwei U-förmige Bügel 12, 13 für eine jeweilige Nackenstütze des mit dem Gurtgestell 1 bildbaren Zweier-Fahrzeugsitzes vorhanden.

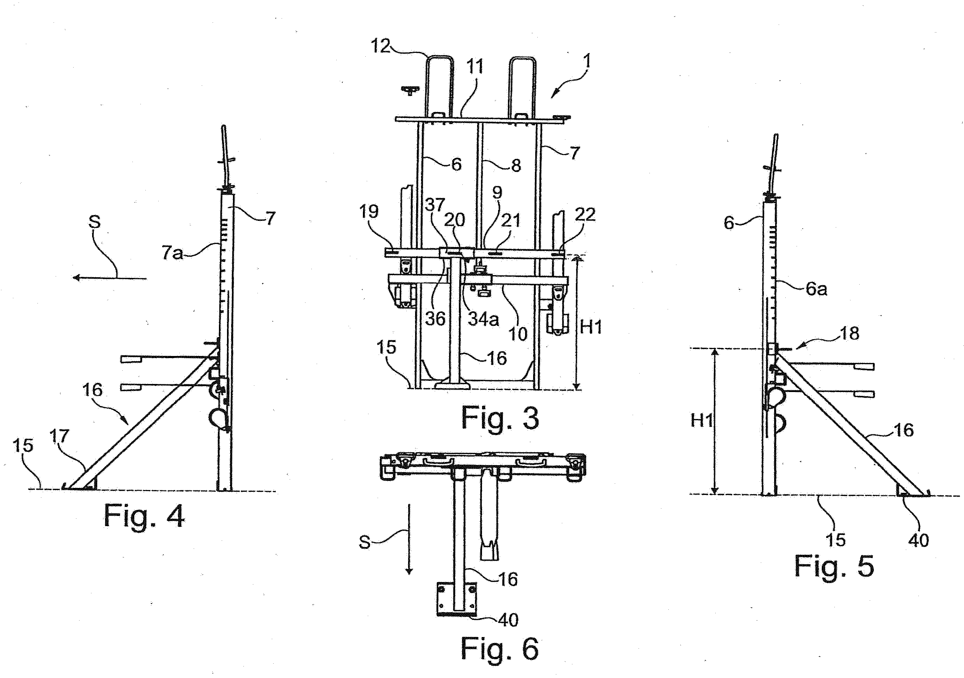

Die jeweiligen unteren Endabschnitte der äußeren Vertikalstützen 6 und 7 sind mit einem Verbindungsprofil 14 verbunden. Das Verbindungsprofil 14 ist im montierten Zustand im Fahrzeug oberhalb anschließend an einer Oberseite eines in den Fig. 3-5 und 8 angedeuteten Fahrzeugbodens 15 damit verbunden vorhanden z. B. verschraubt abgestützt.

Die unteren Endabschnitte der Vertikalstützen 6, 7 sind demgemäß direkt und/oder über das Verbindungsprofil 14 im Bereich des Fahrzeugbodens 15 des Fahrzeugs befestigbar.

Zur weiteren Befestigung und Abstützung des Gurtgestells 1 am Fahrzeugboden 15 ist ein Stützabschnitt 16 des Gurtgestells 1 vorhanden. Der Stützabschnitt 16 steht in Sitzrichtung S über eine Ebene vor, die durch eine in Sitzrichtung S vorne liegende jeweilige Vorderseite 6a, 7a, 8a der zueinander in Breitenrichtung B fluchtenden Vertikalstütze 6-8 bestimmt ist.

Der Stützabschnitt 16 ist über ein unteres Stützabschnitt-Ende 17 am Fahrzeugboden 15 befestigbar. Das untere Stützabschnitt-Ende 17 ist in Sitzrichtung S beabstandet ist zum unteren Ende der Vertikalstützen 6, 7 bzw. zum Verbindungsprofil 14.

Der Stützabschnitt 16 mit dessen oberem Endabschnitt greift im Bereich einer Höhe H1 am verbleibenden Teil des Gurtgestells 1 an (s. Fig. 3, 5), die einer zum Beispiel mittleren Sitzflächenhöhe am Gurtgestell 1 eines fertig montierten Fahrzeugsitzes entspricht (s. Fig. 8). Die Höhe H1 ergibt sich durch den Abstand in Längsrichtung des Gurtgestells 1 und damit in Längsrichtung der Vertikalstützen 6-8 von einer Unterseite des Gurtgestells 1 bzw. der Vertikalstützen 6, 7 bzw. des Verbindungsprofils 14 nach oben bis zum Verbindungsbereich, in dem der Stützabschnitt 16 am verbleibenden Gurtgestell 1, 2 angreift. Die Höhe H1 misst sich gemäß den in den Figuren dargestellten Ausführungsbeispielen zum Beispiel bis zu einer Mitte des Querprofils 9 (s. Fig. 3, 5, 8). Die Höhe H1 im Bereich einer Sitzflächenhöhe kann z. B. um ca. 10-30 Millimetern nach oben oder unten variieren, zum Beispiel bezogen auf eine Höhe einer Mitte eines Querprofils.

Das Querprofil 9, an dem der obere Endabschnitt des Stützabschnitts 16 angebunden ist, greift am verbleibenden Teil des Gurtgestells 1 entsprechend im Bereich der Höhe H1 am verbleibenden Teil des Gurtgestells 1 an. Vorteilhaft ist der Stützabschnitt 16 mit seinem oberen Endabschnitt mit dem Querprofil 9 verbunden und somit mit dem verbleibenden Teil des Gurtgestells 1 verbunden.

Das Gurtgestell 1 ist ausgebildet, an dem damit bildbaren Fahrzeugsitz einen mobilen tragbaren Kindersitz (nicht gezeigt) mit einem Isofix-Befestigungssystem zu befestigen. Da das Gurtgestell 1 für einen Zweier-Fahrzeugsitz dient, ist das Gurtgestell 1 bzw. 2 vorbereitet gestaltet, um einen Kindersitz an jedem der beiden Sitzplätze des Fahrzeugsitzes 3 zu befestigen. Demgemäß ist am Querprofil 9 ein Verankerungsabschnitt 18 des Isofix-Befestigungssystems vorhanden (s. Fig. 5). Der Verankerungsabschnitt 18 umfasst pro anbringbarem Kindersitz ein Paar bzw. zwei Halteelemente also insgesamt vier Halteelemente 19-22. Die Halteelemente 19-22 sind als Haltebügel ausgestaltet. Die beiden Halteelemente 19, 20 dienen zur Befestigung eines Kindersitzes auf einem ersten rechtsseitigen Sitzplatz des betreffenden Zweier-Fahrzeugsitzes 3. Die anderen Halteelemente 21, 22 dienen zur Befestigung eines Kindersitzes auf einem zweiten Sitzplatz des betreffenden Zweier-Fahrzeugsitzes. An dem jeweiligen Kindersitz sind zwei passende Verankerungselemente zum Beispiel mit Rasthaken des Isofix-Befestigungssystems zum lösbaren Verrasten an den Halteelementen 19, 20 bzw. 21, 22 vorgesehen. Ein Kindersitz ist damit an den Halteelementen 19, 20 verrastbar oder an den Halteelementen 21, 22.

Das Gurtgestell 2 gemäß Fig. 7 unterscheidet sich vom Gurtgestell 1 im Wesentlichen dadurch, dass am Querprofil 9 für beide Sitzplätze des bildbaren Fahrzeugsitzes 3 jeweils ein Element 23, 24 des Personenrückhaltesystems 5 aufgenommen ist, zusätzlich zu den vier Halteelementen 19-22. Die Elemente 23, 24 bilden für jeden Sitzplatz ein Gurtaufroller mit einem damit aufrollbaren Sicherheitsgurtabschnitt 28, 29. Außerdem ist am Gurtgestell 2 ein Querträger 27 aus einem Flachmaterial gebildet, mit einer Längs-Schmalseite nach oben gerichtet. Der Querträger 27 ist daher nicht wie bei dem Gurtgestell 1 als Vierkant-Hohlprofil ausgebildet. Vorteilhaft ist der Querträger 27 damit vergleichsweise kompakt und mit reduzierter Materialmenge bereitgestellt. Der Querträger 27 steht an den beiden Vertikalstützen 6, 7 seitlich nicht nach außen über. Am Querträger 27 sind die beiden Gurtschlösser 30, 31 befestigt.

Außerdem ist ein Befestigungsabschnitt 41 an jeder Stirnseite des Querprofils 9 nach unten gerichtet vorgesehen, an dem der Gurtaufroller 23 bzw. 24 angebracht ist. Mit dem linksseitigen den Gurtaufroller 24 tragenden Befestigungsabschnitt 41 ist das Gurtgestell 2 außerdem an einer Innenseite einer Fahrzeugwand oder einer Fahrzeugsäule des betreffenden Fahrzeugs befestigbar. Damit ist es mechanisch vorteilhaft, den Stützabschnitt 16 am Gurtgestell 2 etwas nach außen von der Mitte weg zur Vertikalstütze 6 hin zu positionieren. Der Stützabschnitt 16 greift demgemäß zwischen den Halteelementen 19 und 20 am Querprofil 9 an.

Der Stützabschnitt 16 ist in Längsrichtung des Querprofils 9 verstellbar am Querprofil 9 angebracht. Hierfür ist ein Verbindungsprofil 34 vorgesehen, das zwei gegenüberliegende Anlageschenkel 35, 36 und einen weiteren Schenkel 37 aufweist. Das als U-förmiger Schuh gestaltete Verbindungsprofil 34 überdeckt einen Teil einer Oberseite des Querprofils 9 und einen Teil einer Unterseite des Querprofils 9. Durch eine Aussparung 34a wie einen Schlitz im Verbindungsprofil 34 greift ein Halteelement 20. Rückwärtig sind die Anlageschenkel 35, 36 mit einer durchgreifenden Steck-Schraubverbindung 38 verbunden. Das Verbindungsprofil 34 greift benachbart zur mittleren Vertikalstütze 8 am Querprofil 9 an.

Der Querträger 10, 27 am Gurtgestell 1, 2 ist in einem Bereich einer Höhe H2 des Gurtgestells 1, 2 vorhanden, in welchem eine Auflage 39 ein Sitzflächenpolster 42 der Sitzpolsterung ausgebildet ist (s. Fig. 8). Fig. 8 zeigt auch ein Rückenlehnenpolster 43.

Mittels eines am Stützabschnitt 16 fest verbunden vorhandenen Befestigungsblechs 40 am unteren Ende des Stützabschnitts 16 ist der Stützabschnitt 16 mit dem Fahrzeugboden 15 fest verbindbar zum Beispiel lösbar verschraubbar.

### Bezugszeichenliste

- 1: Gurtgestell
- 2: Gurtgestell
- 3: Fahrzeugsitz
- 4: Sitzpolsterung
- 5: Personenrückhaltesystem
- 6: Vertikalstütze
- 6a: Vorderseite
- 7: Vertikalstütze
- 7a: Vorderseite
- 8: Vertikalstütze
- 8a: Vorderseite
- 9: Querprofil
- 10: Querträger
- 11: Querholm
- 12: Bügel
- 13: Bügel
- 14: Verbindungsprofil
- 15: Fahrzeugboden
- 16: Stützabschnitt
- 17: Stützabschnitt-Ende
- 18: Verankerungsabschnitt
- 19: Halteelement
- 20: Halteelement
- 21: Halteelement
- 22: Halteelement
- 23: Element
- 24: Element
- 25: Gurtaufroller
- 26: Gurtaufroller
- 27: Querträger
- 28: Sicherheitsgurtabschnitt
- 29: Sicherheitsgurtabschnitt
- 30: Gurtschloss
- 31: Gurtschloss
- 32: Gurtumlenker
- 33: Gurtumlenker
- 34: Verbindungsprofil
- 34a: Aussparung
- 35: Anlageschenkel
- 36: Anlageschenkel
- 37: Schenkel
- 38: Steck-Schraubverbindung
- 39: Auflage
- 40: Befestigungsblech
- 41: Befestigungsabschnitt
- 42: Sitzflächenpolster
- 43: Rückenlehnenpolster

## Patentansprüche

1. Gurtgestell (1, 2) für einen mit dem Gurtgestell (1, 2) erstellbaren Fahrzeugsitz (3), wobei das Gurtgestell (1, 2) zur Anordnung einer Sitzpolsterung und eines Personenrückhaltesystems (5) an dem Fahrzeugsitz (3) ausgebildet ist, um mit dem Personenrückhaltesystem (5) eine in Sitzrichtung im montierten Fahrzeugsitz (3) sitzende Person zu sichern, und wobei das Gurtgestell (1, 2) zumindest eine Vertikalstütze (6-8) und ein zur Vertikalstütze (6-8) quer ausgerichtetes Querprofil (9) umfasst, und wobei im montierten Zustand des Fahrzeugsitzes die Vertikalstütze (6-8) in Längsrichtung vertikal ausgerichtet und über einen unteren Endabschnitt der Vertikalstütze (6-8) im Bereich eines Fahrzeugbodens (15) des Fahrzeugs befestigbar ist, und dass zur Abstützung des Gurtgestells (1, 2) am Fahrzeugboden (15) ein Stützabschnitt des Gurtgestells (1, 2) vorhanden ist, wobei der Stützabschnitt (16) in Sitzrichtung über eine Ebene vorsteht, die durch eine in Sitzrichtung vorne liegende Vorderseite der Vertikalstütze (6-8) bestimmt ist, und wobei der Stützabschnitt (16) über ein unteres Stützabschnitt-Ende am Fahrzeugboden (15) befestigbar ist, wobei das untere Stützabschnitt-Ende in Sitzrichtung beabstandet ist zum unteren Ende der Vertikalstütze (6-8), **dadurch gekennzeichnet, dass** der Stützabschnitt (16) im Bereich einer Höhe am verbleibenden Teil des Gurtgestells (1, 2) angreift, die einer Sitzflächenhöhe am Gurtgestell (1, 2) eines fertig montierten Fahrzeugsitzes (3) entspricht.

2. Gurtgestell (1, 2) nach Anspruch 1, **dadurch gekennzeichnet, dass** das Querprofil (9) am verbleibenden Teil des Gurtgestells (1, 2) im Bereich einer Höhe am verbleibenden Teil des Gurtgestells (1, 2) angreift, die einer Sitzflächenhöhe am Gurtgestell (1, 2) eines fertig montierten Fahrzeugsitzes (3) entspricht.

3. Gurtgestell (1, 2) nach Anspruch 1 oder Anspruch 2, **dadurch gekennzeichnet, dass** am Querprofil (9) ein Verankerungsabschnitt (18) eines Befestigungssystems für die Befestigung eines Kindersitzes an dem Fahrzeugsitz (3) ausgebildet ist.

4. Gurtgestell (1, 2) nach einem der vorhergehenden Ansprüche, **dadurch gekennzeichnet, dass** ein Querträger (10) des Gurtgestells (1, 2) vorhanden ist, welcher quer zur zumindest einen Vertikalstütze (6-8) ausgerichtet ist, wobei der Querträger (10) unterhalb des Querprofils (9) vorhanden ist.

5. Gurtgestell (1, 2) nach einem der vorhergehenden Ansprüche, **dadurch gekennzeichnet, dass** am Querprofil (9) ein Verankerungsabschnitt (18) eines Befestigungssystems für die Befestigung eines Kindersitzes an dem Fahrzeugsitz (3) ausgebildet ist und zusätzlich ein Element des Personenrückhaltesystems (5) aufgenommen ist.

6. Gurtgestell (1, 2) nach einem der vorhergehenden Ansprüche, **dadurch gekennzeichnet, dass** der Stützabschnitt (16) am Querprofil (9) angebracht ist.

7. Gurtgestell (1, 2) nach einem der vorhergehenden Ansprüche, **dadurch gekennzeichnet, dass** das Querprofil (9) im Bereich einer Höhe des Gurtgestells (1, 2) von 570 bis 600 Millimeter oder im Bereich einer Höhe des Gurtgestells (1, 2) von 450 bis 480 Millimeter vorhanden ist.

8. Gurtgestell (1, 2) nach einem der vorhergehenden Ansprüche, **dadurch gekennzeichnet, dass** am Querträger (10) ein Element des Personenrückhaltesystems (5) angebracht ist.

9. Gurtgestell (1, 2) nach einem der vorhergehenden Ansprüche, **dadurch gekennzeichnet, dass** der Stützabschnitt (16) über ein Verbindungsprofil (34), das zwei gegenüberliegenden Anlageschenkel (35, 36) aufweist, an dem Querprofil (9) angebracht ist, wobei das Verbindungsprofil (34) ausgebildet ist, einen Teil einer Oberseite des Querprofils (9) und einen Teil der Unterseite des Querprofils (9) zu überdecken.

10. Gurtgestell (1, 2) nach einem der vorhergehenden Ansprüche, **dadurch gekennzeichnet, dass** das Verbindungsprofil (34) eine Aussparung (34a) aufweist, durch welche der Verankerungsabschnitt (18) des Befestigungssystems für die Befestigung des Kindersitzes an dem Fahrzeugsitz (3) durchreicht.

11. Gurtgestell (1, 2) nach einem der vorhergehenden Ansprüche, **dadurch gekennzeichnet, dass** das Verbindungsprofil (34) am oberen Endabschnitt des Stützabschnitts (16) vorhanden ist.

12. Gurtgestell (1, 2) nach einem der vorhergehenden Ansprüche, **dadurch gekennzeichnet, dass** der Querträger (10) am Gurtgestell (1, 2) in einem Bereich einer Höhe des Gurtgestells (1, 2) vorhanden ist, in welchem eine Auflage (39) für ein Sitzflächenpolster (42) des Sitzpolsters ausgebildet ist.

13. Gurtgestell (1, 2) nach einem der vorhergehenden Ansprüche, **dadurch gekennzeichnet, dass** das Querprofil (9) an der Vertikalstütze (6-8) aufgenommen ist.

14. Gurtgestell (1, 2) nach einem der vorhergehenden Ansprüche, **dadurch gekennzeichnet, dass** das Verbindungsprofil (34) benachbart zur Vertikalstütze (6-8) am Querprofil (9) angreift.

15. Gurtgestell (1, 2) nach einem der vorhergehenden Ansprüche, **dadurch gekennzeichnet, dass** mehrere Vertikalstützen (6-8) horizontal beabstandet voneinander vorhanden sind.

16. Fahrzeugsitz mit einem Gurtgestell (1, 2) nach einem der vorhergehenden Ansprüche.
